(19) **Europäisches Patentamt**
**European Patent Office**
**Office européen des brevets**

(11) **EP 3 764 651 A1**

(12) **EUROPEAN PATENT APPLICATION**

(43) Date of publication:
**13.01.2021 Bulletin 2021/02**

(51) Int Cl.:
**H04N 19/82** (2014.01)     **H04N 19/117** (2014.01)
**H04N 19/136** (2014.01)    **H04N 19/59** (2014.01)
**H04N 19/86** (2014.01)

(21) Application number: **20178490.7**

(22) Date of filing: **05.06.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.07.2019   CN 201910627550**

(71) Applicant: **FUJITSU LIMITED
Kanagawa 211-8588 (JP)**

(72) Inventors:
• **Xu, Luhang
  Beijing, 100027 (CN)**
• **Zhu, Jianqing
  Beijing, 100027 (CN)**

(74) Representative: **Hoffmann Eitle
Patent- und Rechtsanwälte PartmbB
Arabellastraße 30
81925 München (DE)**

(54) **LOOP FILTER APPARATUS AND IMAGE DECODING APPARATUS**

(57)     Embodiments of this disclosure provide a loop filter apparatus and an image decoding apparatus. The loop filter apparatus includes: a down-sampling unit configured to perform down sampling on a frame of an input reconstructed image to obtain feature maps of N channels; a residual learning unit configured to perform residual learning on input feature maps of N channels to obtain feature maps of N channels; and an up-sampling unit configured to perform up sampling on input feature maps of N channels to obtain an image of an original size of the reconstructed image. In the embodiments of this disclosure, functions of the loop filter are carried out by using a convolutional neural network, which may reduce a difference between a reconstructed frame and an original frame, reduce an amount of computation, and save processing time of the CNN.

FIG. 2

200

**loop filter apparatus**

204
**first calculating unit**

201
**down-sampling unit**

202
**residual learning unit**

203
**up-sampling unit**

205
**second calculating unit**

**Description**

<u>Field</u>

This disclosure relates to the field of video coding technologies and image compression technologies.

<u>Background</u>

Lossy images and video compression algorithms may cause artifacts, including blocking, blurring and ringing, as well as sample distortion. Currently, convolutional neural network (CNN) is a good way to solve such problems in image processing. In traditional video compression software (such as VTM), a deblocking filter, a sample adaptive offset (SAO) filter, and an adaptive loop filter (ALF) can be used as loop filters to reduce distortion. Although using CNN to replace these traditional filters may reduce video distortion, the CNN will spend a lot of time to process the videos, and the amount of computation is too large.

It should be noted that the above description of the background is merely provided for clear and complete explanation of this disclosure and for easy understanding by those skilled in the art. And it should not be understood that the above technical solution is known to those skilled in the art as it is described in the background of this disclosure.

<u>Summary</u>

Embodiments of this disclosure provide a loop filter apparatus and an image decoding apparatus, in which functions of the loop filter are carried out by using a convolutional neural network, which may reduce a difference between a reconstructed frame and an original frame, reduce an amount of computation, and save processing time of the CNN.

According to a first aspect of the embodiments of this disclosure, there is provided a loop filter apparatus, the loop filter apparatus including:

   a down-sampling unit configured to perform down sampling on a frame of an input reconstructed image to obtain feature maps of N channels;
   a residual learning unit configured to perform residual learning on input feature maps of N channels to obtain feature maps of N channels; and
   an up-sampling unit configured to perform up sampling on input feature maps of N channels to obtain an image of an original size of the reconstructed image.

According to a second aspect of the embodiments of this disclosure, there is provided an image decoding apparatus, the image decoding apparatus including:

   a processing unit configured to perform de-transform and de-quantization processing on a received code stream;
   a CNN filtering unit configured to perform first time of filtering processing on output of the processing unit;
   an SAO filtering unit configured to perform second time of filtering processing on output of the CNN filtering unit; and
   an ALF filtering unit configured to perform third time of filtering processing on output of the SAO filtering unit, take a filtered image as the reconstructed image and output the reconstructed image;
   wherein the CNN filtering unit includes the loop filter apparatus as described in the first aspect.

According to a third aspect of the embodiments of this disclosure, there is provided a loop filter method, the method including:

   performing down sampling on a frame of an input reconstructed image by using a convolutional layer to obtain feature maps of N channels;
   performing residual learning on input feature maps of N channels by using multiple successively connected residual blocks to obtain feature maps of N channels; and
   performing up sampling on input feature maps of N channels by using another convolutional layer and an integration layer to obtain an image of an original size of the reconstructed image.

According to a fourth aspect of the embodiments of this disclosure, there is provided an image decoding method, the method including:

   performing de-transform and de-quantization processing on a received code stream;
   performing first time of filtering processing on de-transformed and de-quantized contents by using a CNN filter;

performing second time of filtering processing on output of the CNN filter by using an SAO filter; and

performing third time of filtering processing on output of the SAO filter by using an ALF filter, taking a filtered image as the reconstructed image and outputting the reconstructed image;

wherein the CNN filter includes the loop filter apparatus as described in the first aspect.

According to another aspect of the embodiments of this disclosure, there is provided a computer readable program, which, when executed in an image processing device, will cause the image processing device to carry out the method as described in the third or fourth aspect.

According to a further aspect of the embodiments of this disclosure, there is provided a computer storage medium, including a computer readable program, which will cause an image processing device to carry out the method as described in the third or fourth aspect.

An advantage of the embodiments of this disclosure exists in that according to any one of the above-described aspects of the embodiments of this disclosure, functions of the loop filter are carried out by using a convolutional neural network, which may reduce a difference between a reconstructed frame and an original frame, reduce an amount of computation, and save processing time of the CNN

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:

FIG. 1 is a schematic diagram of the image compression system of Embodiment 1;
FIG. 2 is a schematic diagram of the loop filter apparatus of Embodiment 2;
FIG. 3 is a schematic diagram of an embodiment of a downsampling unit;
FIG. 4 is a schematic diagram of a network structure of an embodiment of a residual block;
FIG. 5 is a schematic diagram of an embodiment of an upsampling unit;
FIG. 6 is a schematic diagram of a network structure of an embodiment of the loop filter apparatus of Embodiment 2;
FIG. 7 is a schematic diagram of the loop filter method of Embodiment 4;
FIG. 8 is a schematic diagram of the image decoding method of Embodiment 5; and
FIG. 9 is a schematic diagram of the image processing device of Embodiment 6.

Detailed Description

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of' or "a type of' in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In video compression, video frames are defined as intra-frames and inter-frames. Intra-frames are frames that are compressed without reference to other frames. Inter-frames are frames that are compressed with reference to other frames. A traditional loop filter is effective in intra-frames or inter-frames prediction. Since a convolutional neural network may be applied to single image restoration, a CNN is used in this disclosure to process sub-sampled video frames based on intra-frame compression.

Various implementations of the embodiments of this disclosure shall be described below with reference to the accompanying drawings. These implementations are examples only, and are not intended to limit this disclosure.

Embodiment 1

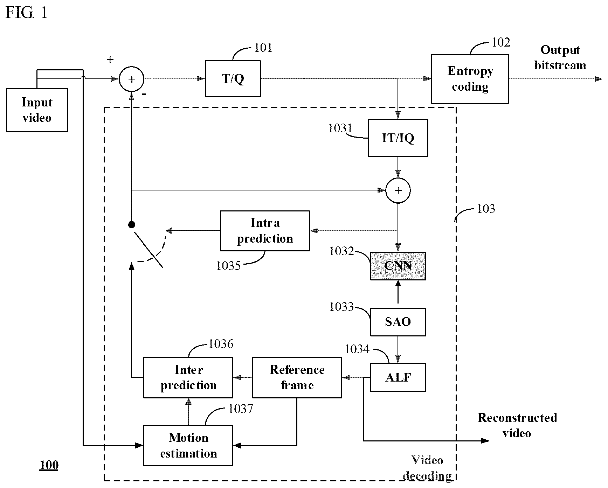

The embodiment of this disclosure provides an image compression system. FIG. 1 is a schematic diagram of the image compression system of the embodiment of this disclosure. As shown in FIG. 1, an image compression system 100 of the embodiment of this disclosure includes a first processing unit 101, an entropy encoding apparatus 102 and an image decoding apparatus 103. The first processing unit 101 is configured to perform transform (T) and quantization (Q) processing on an input image, which is denoted by T/Q in FIG. 1; the entropy encoding apparatus 102 is configured to perform entropy encoding on output of the first processing unit 101, and output bit streams; and the image decoding apparatus 103 is configured to perform decoding processing on the output of the first processing unit 101, and perform intra prediction and inter prediction.

In the embodiment of this disclosure, as shown in FIG. 1, the image decoding apparatus 103 includes a second processing unit 1031, a CNN filtering unit 1032, an SAO filtering unit 1033, and an ALF filtering unit 1034. The second processing unit 1031 is configured to perform de-transform (IT) and de-quantization (IQ) processing on received code streams (bit streams), which is denoted by IT/IQ in FIG. 1; the CNN filtering unit 1032 is configured to perform first time of filtering processing on output of the first processing unit 1031; the SAO filtering unit 1033 is configured to perform second time of filtering processing on output of the CNN filtering unit 1032; and the ALF filtering unit 1034 is configured to perform third time of filtering processing on output of the SAO filtering unit 1033, take a filtered image as a reconstructed image and output the reconstructed image.

In the embodiment of this disclosure, as shown in FIG. 1, the image decoding apparatus 103 further includes a first predicting unit 1035, a second predicting unit 1036 and a motion estimating unit 1037. The first predicting unit 1035 is configured to perform intra prediction on the output of the second processing unit 1031; the second predicting unit 1036 is configured to perform inter prediction on the output of the ALF filtering unit 1034 according to a motion estimation result and a reference frame; and the motion estimating unit 1037 is configured to perform motion estimation according to an input video frame and the reference frame, to obtain the motion estimation result and provide the motion estimation result to the second predicting unit 1036.

In the embodiment of this disclosure, reference may be made to related techniques for implementations of the first processing unit 101, the entropy coding apparatus 102, the second processing unit 1031, the SAO filtering unit 1033, the ALF filtering unit 1034, the first predicting unit 1035, the second predicting unit 1036 and the motion estimating unit 1037, which shall not be described herein any further.

In this embodiment of this disclosure, the CNN filtering unit 1032 is used to replace a deblocking filter, and a convolutional neural network is used to implement a function of a loop filter, which may reduce a difference between a reconstructed frame and an original frame, reduce an amount of computation, and save processing time of the CNN.

The CNN filtering unit 1032 of the embodiment of this disclosure shall be described below.

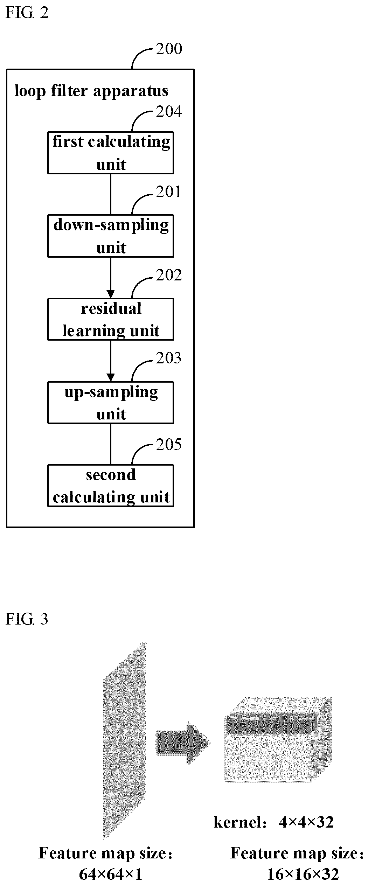

FIG. 2 is a schematic diagram of a loop filter apparatus 200 of this embodiment. The loop filter apparatus 200 functions as the CNN filtering unit 1032 of FIG. 1, that is, the CNN filtering unit 1032 of FIG. 1 may include the loop filter apparatus 200 of FIG. 2.

As shown in FIG. 2, the loop filtering apparatus 200 includes a down-sampling unit 201, a residual learning unit 202 and an up-sampling unit 203. The down-sampling unit 201 is configured to perform down sampling on a frame of an input reconstructed image to obtain feature maps of N channels; the residual learning unit 202 is configured to perform residual learning on input feature maps of N channels to obtain feature maps of N channels; and the up-sampling unit 203 is configured to perform up sampling on input feature maps of N channels to obtain an image of an original size of the reconstructed image.

In one or some embodiments, the down-sampling unit 201 may perform the down sampling on the frame of input reconstructed image via a convolutional layer (referred to as a first convolutional layer, or a down-sampling convolutional layer) to obtain the feature maps of N channels. A kernel size, the number of channels and a stride of convolution of the convolutional layer are not limited in the embodiment of this disclosure. For example, the convolutional layer may be a 4×4 32-channel convolutional layer with a stride of convolution of (4, 4).

In order to reduce the number of pixels, down-sampling may be performed on the frame of input reconstructed image via the convolutional layer, in which the frame the reconstructed image is down-sampled from N1×N1 to (N1/4) × (N1/4), where, N1 is the number of pixels. For example, down-sampling is performed on a 64×64 image frame by using the above 4×4×32 convolutional layer, and 16×16 feature maps of 32 channels may be obtained, as shown in FIG. 3. Thus, via the first convolutional layer, it is possible to ensure that useful information is not lost and useless information is removed.

In one or some embodiments, the residual learning unit 202 may perform the residual learning on input feature maps of N channels respectively via multiple residual blocks, to obtain feature maps of N channels respectively and output the feature maps of N channels respectively. With the multiple residual blocks, performance of restoration may be improved.

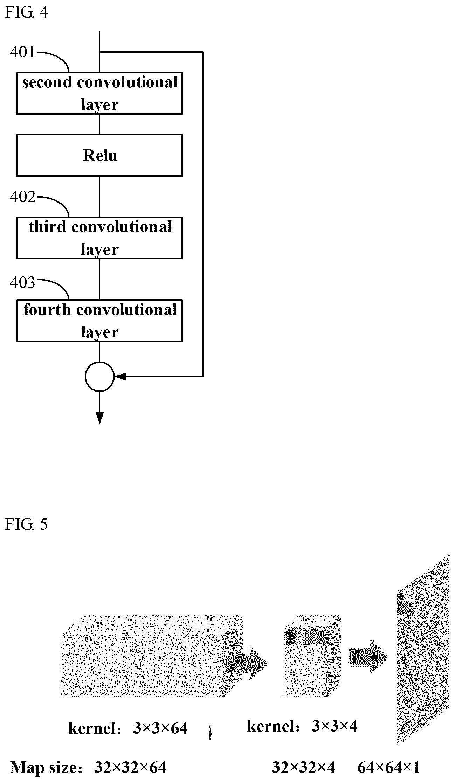

In one or some embodiments, four residual blocks may be used to balance a processing speed and performance, and each residual block may include three convolutional layers. FIG. 4 is a schematic diagram of an embodiment of a residual block. As shown in FIG. 4, the residual block may include a second convolutional layer 401, a third convolutional layer 402 and a fourth convolutional layer 403. The second convolutional layer 401 is configured to perform dimension increasing processing on input feature maps of N channels to obtain feature maps of M channels, M being greater than N; the third convolutional layer 402 is configured to perform dimension reducing processing on the feature maps of M channels from the second convolutional layer 401 to obtain feature maps of N channels; and the fourth convolutional layer 403 is configured to perform feature extraction on the feature maps of N channels from the third convolutional layer 402 to obtain feature maps of N channels and output the feature maps of N channels.

Still taking the above N=32 as an example, the second convolutional layer 401 may be a 1×1 192-channel convolutional layer, and via this convolutional layer, dimensions may be expanded; the third convolutional layer 402 may be a 1×1 32-channel convolutional layer, and via this convolutional layer, dimensions may be reduced; and the fourth convolutional layer 403 may be a 3×3 32-channel depthwise-separable convolutional layer, and via this convolutional layer, convolution parameters may be reduced.

In one or some embodiments, the up-sampling unit 203 may perform the up sampling on input feature maps of N channels via a convolutional layer (referred to as a fifth convolutional layer) and an integration layer, to obtain an image of an original size of the above reconstructed image.

In an embodiment, the fifth convolutional layer may compress input feature maps of N channels to obtain feature maps of N channels, and the integration layer may integrate the feature maps of N channels from the fifth convolutional layer, combine them into an image, and take the image as the image of an original size of the reconstructed image.

For example, the fifth convolutional layer may be a 3×3 4-channel convolutional layer, and the integration layer may be a pixel shuffle layer (emulation + permutation), which may integrate input 32×32 feature maps of 4 channels into 64×64 feature maps of 1 channel, as shown in FIG. 5, and the 64×64 feature map is a result of difference learnt by a neural network.

In one or some embodiments, as shown in FIG. 2, the loop filter apparatus 200 may further include a first calculating unit 204 and a second calculating unit 205. The first calculating unit 204 is configured to divide the frame of input reconstructed image by a quantization step, and take a result of calculation as input of the down-sampling unit 201, and the second calculating unit 205 is configured to multiply an image of an original size output by the up-sampling unit 203 by the quantization step, and take a result of calculation as the image of an original size and output the image of an original size.

In image and video compression, a large range of values are usually changed into a small range of values by using quantization. The quantization operation usually consists of two parts, namely forward quantization (FQ or Q) in an encoder and inverse quantization (IQ) in a decoder. And the quantization operation can be used to reduce the accuracy of image data after applying transformation (T). The following formula shows a usual example of a quantizer and an inverse quantizer:

$$FQ = \text{round}\,(X\,/\,\text{Qstep}),$$

$$Y = FQ \times \text{Qstep};$$

where, X is a value before the quantization, Y is a value after the inverse quantization, and Qstep is a quantization step. A loss of the quantization is induced by a function *round,* and in video compression, a quantization parameter varies in a range of 0-51, and a relationship between QP and Qstep is as follows:

| QP | Qstep | QP | Qstep | QP | Qstep | QP | Qstep | QP | Qstep |
|----|-------|----|-------|----|-------|----|-------|----|-------|
| 0 | 0.625 | 11 | 2.25 | 22 | 8 | 33 | 28 | 44 | 104 |
| 1 | 0.6875 | 12 | 2.5 | 23 | 9 | 34 | 32 | 45 | 112 |
| 2 | 0.8125 | 13 | 2.75 | 24 | 10 | 35 | 36 | 46 | 128 |
| 3 | 0.875 | 14 | 3.25 | 25 | 11 | 36 | 40 | 47 | 144 |
| 4 | 1 | 15 | 3.5 | 26 | 13 | 37 | 44 | 48 | 160 |
| 5 | 1.125 | 16 | 4 | 27 | 14 | 38 | 52 | 49 | 176 |
| 6 | 1.25 | 17 | 4.5 | 28 | 16 | 39 | 56 | 50 | 208 |
| 7 | 1.375 | 18 | 5 | 29 | 18 | 40 | 64 | 51 | 224 |
| 8 | 1.625 | 19 | 5.5 | 30 | 20 | 41 | 72 | | |
| 9 | 1.75 | 20 | 6.5 | 31 | 22 | 42 | 80 | | |
| 10 | 2 | 21 | 7 | 32 | 26 | 43 | 88 | | |

Qstep obtained from QP may reduce a difference between videos encoded by different QPs. In the embodiment of this disclosure, the reconstructed image or frame is divided by Qstep before the downsampling, which may control blocking of different images at the same level, and in the embodiment of this disclosure, multiplication by Qstep is performed after the upsampling, which may restore pixel values. In this way, a CNN model may use video sequences of different QPs.

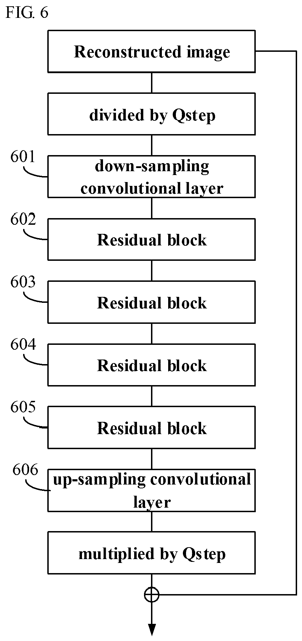

FIG. 6 is a schematic diagram of a network structure of the loop filter apparatus 200 of the embodiment of this disclosure. As shown in FIG. 6, the reconstructed image is divided by Qstep and then output to a down-sampling convolutional layer 601. The down-sampling convolutional layer 601 performs down-sampling on input reconstructed image to obtain feature maps of N channels and outputs the feature maps of N channels to a residual block 602. The residual block 602 performs residual learning on the feature maps of N channels to obtain feature maps of N channels and outputs the feature maps of N channels to a residual block 603, the residual block 603 performs the same processing as the residual block 602 to obtain feature maps of N channels and outputs the feature maps of N channels to a residual block 604, the residual block 604 performs the same processing as the residual block 602 to obtain feature maps of N channels and outputs the feature maps of N channels to a residual block 605, the residual block 605 performs the same processing as the residual block 602 to obtain feature maps of N channels and outputs the feature maps of N channels to an up-sampling convolutional layer 606, and the up-sampling convolutional layer 606 performs up-sampling on input feature maps of N channels to obtain image of the original size of the reconstructed image and output the image of the original size, and the image of the original size is output after being multiplied by Qstep to obtain a filtering result.

In the embodiment of this disclosure, as described above, the CNN filter 1032 may include the loop filtering apparatus 200, and furthermore, the CNN filter 1032 may include other components or assemblies, and the embodiment of this disclosure is not limited thereto.

In the embodiment of this disclosure, as described above, the above loop filtering apparatus 200 may be used to process intra frames; however, this embodiment is not limited thereto.

It should be noted that the loop filter apparatus 200 of the embodiment of this disclosure is only schematically described in FIG. 2; however, this disclosure is not limited thereto. For example, connection relationships between the modules or components may be appropriately adjusted, and furthermore, some other modules or components may be added, or some modules or components therein may be reduced. And appropriate variants may be made by those skilled in the art according to the above contents, without being limited to what is contained in FIG. 2.

The image compression system of the embodiment of this disclosure carries out the functions of the loop filter by using a convolutional neural network, which may reduce a difference between a reconstructed frame and an original frame, reduce an amount of computation, and save processing time of the CNN

Embodiment 2

The embodiment of this disclosure provides a loop filter apparatus. FIG. 2 is a schematic diagram of the loop filter apparatus 200 of the embodiment of this disclosure, and FIG. 6 is a schematic diagram of a network structure of the loop filter apparatus of the embodiment of this disclosure. As the loop filter apparatus has been described in Embodiment 1 in detail, its contents are incorporated herein, and shall not be described herein any further.

With the loop filter apparatus of the embodiment of this disclosure, a convolutional neural network is used to carry out the functions of the loop filter, which may reduce a difference between a reconstructed frame and an original frame, reduce an amount of computation, and save processing time of the CNN

Embodiment 3

The embodiment of this disclosure provides an image decoding apparatus. FIG. 1 shows the image decoding apparatus 103 of the embodiment of this disclosure. As the image decoding apparatus 103 has been described in Embodiment 1 in detail, its contents are incorporated herein, and shall not be described herein any further.

With the image decoding apparatus of the embodiment of this disclosure, a convolutional neural network is used to carry out the functions of the loop filter, which may reduce a difference between a reconstructed frame and an original frame, reduce an amount of computation, and save processing time of the CNN

Embodiment 4

The embodiment of this disclosure provides a loop filter method. As principles of the method for solving problems are similar to that of the loop filter apparatus 200 in Embodiment 1 and has been described in Embodiment 1, reference may be made to the implementation of the loop filter apparatus 200 in Embodiment 1 for implementation of this method, with identical contents being going to be described herein any further.

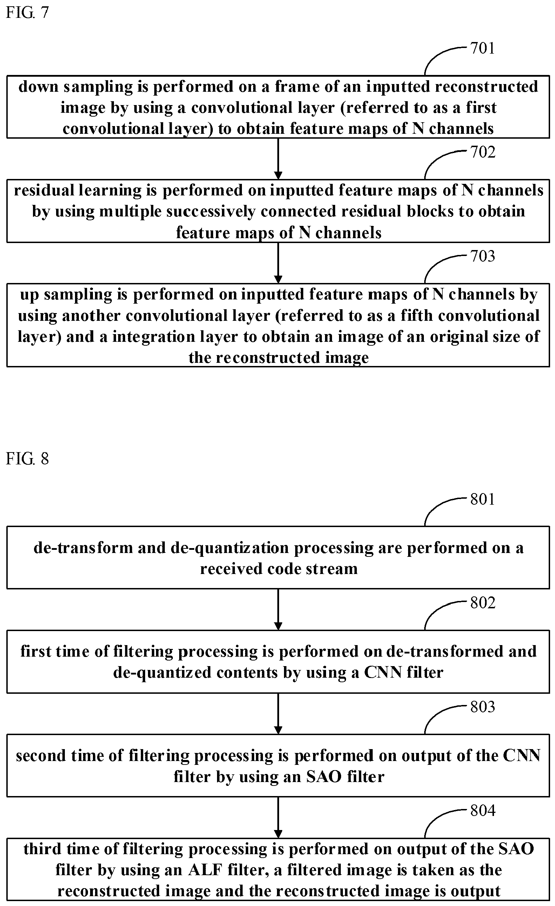

FIG. 7 is a schematic diagram of the loop filter method of the embodiment of this disclosure. As shown in FIG. 7, the loop filter method includes:

701: down sampling is performed on a frame of an input reconstructed image by using a convolutional layer (referred to as a first convolutional layer) to obtain feature maps of N channels;

702: residual learning is performed on input feature maps of N channels by using multiple successively connected residual blocks to obtain feature maps of N channels; and

703: up sampling is performed on input feature maps of N channels by using another convolutional layer (referred to as a fifth convolutional layer) and an integration layer to obtain an image of an original size of the reconstructed image.

In the embodiment of this disclosure, reference may be made to the implementation of the units in FIG. 2 in Embodiment 1 for implementations of the operations in FIG. 7, which shall not be described herein any further.

In operation 702 of the embodiment of this disclosure, each residual block may include three convolutional layers; wherein one convolutional layer (referred to as a second convolutional layer) may perform dimension increasing processing on input feature maps of N channels to obtain feature maps of M channels, M being greater than N, another convolutional layer (referred to as a third convolutional layer) may perform dimension reducing processing on the feature maps of M channels from the second convolutional layer to obtain feature maps of N channels, and the last convolutional layer (referred to as a fourth convolutional layer) may perform feature extraction on the feature maps of N channels from the third convolutional layer to obtain feature maps of N channels. A function relu may be included between the second convolutional layer and the third convolutional layer, and reference may be made to related techniques for principles and implementations of the function relu, which shall not be described herein any further. And furthermore, the fourth convolutional layer may be a depthwise-separable convolutional layer, and reference may be made to related techniques for principles and implementations thereof, which shall not be described herein any further.

In operation 703 of the embodiment of this disclosure, the fifth convolutional layer may compress input feature maps of N channels to obtain feature maps of N channels, and the integration layer may integrate the feature maps of N channels from the fifth convolutional layer, combine them into an image, and take the image as the image of an original size of the reconstructed image.

In the embodiment of this disclosure, before performing the above-described downsampling, input reconstructed image frame may be divided by the quantization step, and after performing the above-described upsampling, the output of the upsampling may be multiplied by the quantization step, and a calculation result may be taken as the image of the original size and output.

In the embodiment of this disclosure, the above reconstructed image frame may be an intra frame.

With the loop filter method of the embodiment of this disclosure, a convolutional neural network is used to carry out the functions of the loop filter, which may reduce a difference between a reconstructed frame and an original frame, reduce an amount of computation, and save processing time of the CNN.

Embodiment 5

The embodiment of this disclosure provides an image decoding method. As principles of the method for solving problems are similar to that of the image decoding apparatus 103 in Embodiment 1 and has been described in Embodiment 1, reference may be made to the implementation of the image decoding apparatus 103 in Embodiment 1 for implementation of this method, with identical contents being not going to be described herein any further.

FIG. 8 is a schematic diagram of the image decoding method of the embodiment of this disclosure. As shown in FIG. 8, the image decoding method includes:

801: de-transform and de-quantization processing are performed on a received code stream;
802: first time of filtering processing is performed on de-transformed and de-quantized contents by using a CNN filter;
803: second time of filtering processing is performed on output of the CNN filter by using an SAO filter; and
804: third time of filtering processing is performed on output of the SAO filter by using an ALF filter, and a filtered image is taken as the reconstructed image and the reconstructed image is output.

In the embodiment of this disclosure, the CNN filter includes the loop filter apparatus 200 as described in Embodiment 1, which is used to carry out the loop filter method in Embodiment 3. As the apparatus and method have been described in embodiments 1 and 3, the contents thereof are incorporated herein, which shall not be described herein any further.

In the embodiment of this disclosure, reference may be made to related techniques for principles and implementations of the SAO filter and the ALF filter, which shall not be described herein any further.

In the embodiment of this disclosure, intra prediction may be performed on the output after de-transform and de-quantization, and inter prediction may be performed on the output of the ALF filter according to a motion estimation result and a reference frame. In addition, motion estimation may be performed according to an input video frame and the above reference frame to obtain the above motion estimation result.

With the image decoding method of the embodiment of this disclosure, a convolutional neural network is used to carry out the functions of the loop filter, which may reduce a difference between a reconstructed frame and an original frame, reduce an amount of computation, and save processing time of the CNN.

Embodiment 6

The embodiment of this disclosure provides an image processing device, including the image compression system 100 described in Embodiment 1, or the loop filter apparatus 200 described in Embodiment 1, or the image decoding apparatus 103 described in Embodiment 3.

As the image compression system 100, the loop filter apparatus 200 and the image decoding apparatus 103 have been described in embodiments 1-3 in detail, the contents of which are incorporated herein, which shall not be described herein any further.

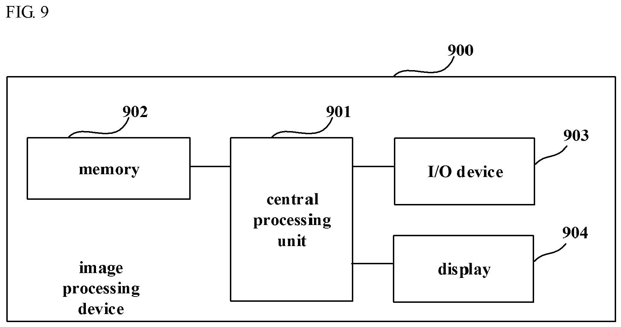

FIG. 9 is a schematic diagram of the image processing device of the embodiment of this disclosure. As shown in FIG. 9, an image processing device 900 may include a central processing unit (CPU) 901 and a memory 902, the memory 902 being coupled to the central processing unit 901. The memory 902 may store various data, and furthermore, it may store a program for information processing, and execute the program under control of the central processing unit 901.

In one embodiment, functions of the loop filter apparatus 200 or the image decoding apparatus 103 may be integrated into the central processing unit 901. The central processing unit 901 may be configured to carry out the method(s) as described in Embodiment(s) 4 and/or 5.

In another embodiment, the loop filter apparatus 200 or the image decoding apparatus 103 and the central processing unit 901 may be configured separately; for example, the loop filter apparatus 200 or the image decoding apparatus 103 may be configured as a chip connected to the central processing unit 901, and the functions of the loop filter apparatus 200 or the image decoding apparatus 103 are executed under the control of the central processing unit 901.

Furthermore, as shown in FIG. 9, the image processing device may include an input/output (I/O) device 903, and a display 904, etc.; wherein functions of the above components are similar to those in the related art, and shall not be described herein any further. It should be noted that the image processing device does not necessarily include all the components shown in FIG. 9; and furthermore, the image processing device may also include components not shown in FIG. 9, and reference may be made to the related art.

An embodiment of this disclosure provides a computer readable program, which, when executed in an image processing device, will cause the image processing device to carry out the method(s) as described in Embodiment(s) 4 and/or 5.

An embodiment of this disclosure provides a computer storage medium, including a computer readable program, which will cause an image processing device to carry out the method(s) as described in Embodiment(s) 4 and/or 5.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in FIGs. 1 and 2 may either correspond to software modules of procedures of a computer program, or correspond to hardware modules. Such software modules may respectively correspond to the steps shown in FIGs. 7 and 8. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

**Claims**

1. A loop filter apparatus, **characterized in that** the loop filter apparatus comprises:

   a down-sampling unit configured to perform down sampling on a frame of an input reconstructed image to obtain feature maps of N channels;
   a residual learning unit configured to perform residual learning on input feature maps of N channels to obtain feature maps of N channels; and
   an up-sampling unit configured to perform up sampling on input feature maps of N channels to obtain an image of an original size of the reconstructed image.

2. The loop filter apparatus according to claim 1, **characterized in that** the down-sampling unit performs the down sampling on frame of input reconstructed image via a first convolutional layer to obtain feature maps of N channels.

3. The loop filter apparatus according to claim 1, **characterized in that** the residual learning unit performs the residual learning on input feature maps of N channels respectively via multiple residual blocks.

4. The loop filter apparatus according to claim 3, **characterized in that** each residual block comprises:

   a second convolutional layer configured to perform dimension increasing processing on input feature maps of N channels to obtain feature maps of M channels, M being greater than N;
   a third convolutional layer configured to perform dimension reducing processing on the feature maps of M channels from the second convolutional layer to obtain feature maps of N channels; and
   a fourth convolutional layer configured to perform feature extraction on the feature maps of N channels from the third convolutional layer to obtain feature maps of N channels.

5. The loop filter apparatus according to claim 4, **characterized in that** the fourth convolutional layer is a depthwise-separable convolutional layer.

6. The loop filter apparatus according to claim 1, **characterized in that** the up-sampling unit performs the up sampling on input feature maps of N channels via a fifth convolutional layer and an integration layer,
the fifth convolutional layer compressing input feature maps of N channels to obtain feature maps of N channels, and the integration layer integrating the feature maps of N channels from the fifth convolutional layer, combining them into an image, and taking the image as the image of an original size of the reconstructed image.

7. The loop filter apparatus according to claim 1, **characterized in that** the loop filter apparatus further comprises:

a first calculating unit configured to divide the frame of input reconstructed image by a quantization step, and take a result of calculation as input of the down-sampling unit; and
a second calculating unit configured to multiply an image of an original size output by the up-sampling unit by the quantization step, and take a result of calculation as the image of an original size and output the image of an original size.

8. The loop filter apparatus according to claim 1, **characterized in that** the frame of the reconstructed image is an intra frame.

9. An image decoding apparatus, **characterized in that** the image decoding apparatus comprises:

a processing unit configured to perform de-transform and de-quantization processing on a received code stream;
a convolutional neural networks (CNN) filtering unit configured to perform first time of filtering processing on output of the processing unit;
a sample adaptive offset (SAO) filtering unit configured to perform second time of filtering processing on output of the CNN filtering unit; and
an adaptive loop filter (ALF) filtering unit configured to perform third time of filtering processing on output of the SAO filtering unit, take a filtered image as the reconstructed image and output the reconstructed image;
wherein the CNN filtering unit comprises a loop filter apparatus, and the loop filter apparatus is configured to:

perform down sampling on a frame of an input reconstructed image to obtain feature maps of N channels;
perform residual learning on input feature maps of N channels to obtain feature maps of N channels; and
perform up sampling on input feature maps of N channels to obtain an image of an original size of the reconstructed image.

10. The image decoding apparatus according to claim 9, **characterized in that** the image decoding apparatus further comprises:

a first predicting unit configured to perform intra prediction on the output of the processing unit;
a second predicting unit configured to perform inter prediction on the output of the ALF filtering unit according to a motion estimation result and a reference frame; and
a motion estimating unit configured to perform motion estimation according to an input video frame and the reference frame, to obtain the motion estimation result and provide the motion estimation result to the second predicting unit.

FIG. 1

FIG. 2

200

**loop filter apparatus**

204

first calculating
unit

201

down-sampling
unit

202

residual
learning unit

203

up-sampling
unit

205

second
calculating unit

FIG. 3

kernel: 4×4×32

Feature map size:
64×64×1

Feature map size:
16×16×32

FIG. 4

FIG. 5

kernel: 3×3×64      kernel: 3×3×4

Map size: 32×32×64          32×32×4    64×64×1

FIG. 6

```
        ┌─────────────────────────────┐
        │     Reconstructed image      │──┐
        └─────────────────────────────┘  │
                      │                   │
        ┌─────────────────────────────┐  │
        │        divided by Qstep      │  │
        └─────────────────────────────┘  │
                      │                   │
 601    ┌─────────────────────────────┐  │
        │        down-sampling         │  │
        │     convolutional layer      │  │
        └─────────────────────────────┘  │
                      │                   │
 602    ┌─────────────────────────────┐  │
        │        Residual block        │  │
        └─────────────────────────────┘  │
                      │                   │
 603    ┌─────────────────────────────┐  │
        │        Residual block        │  │
        └─────────────────────────────┘  │
                      │                   │
 604    ┌─────────────────────────────┐  │
        │        Residual block        │  │
        └─────────────────────────────┘  │
                      │                   │
 605    ┌─────────────────────────────┐  │
        │        Residual block        │  │
        └─────────────────────────────┘  │
                      │                   │
 606    ┌─────────────────────────────┐  │
        │    up-sampling convolutional │  │
        │             layer            │  │
        └─────────────────────────────┘  │
                      │                   │
        ┌─────────────────────────────┐  │
        │       multiplied by Qstep    │  │
        └─────────────────────────────┘  │
                      │                   │
                     ⊕ ─────────────────┘
                      │
                      ▼
```

FIG. 7

```
                                                         701
┌─────────────────────────────────────────────────────────────┐
│  down sampling is performed on a frame of an inputted         │
│  reconstructed image by using a convolutional layer           │
│  (referred to as a first convolutional layer) to obtain       │
│  feature maps of N channels                                   │
└─────────────────────────────────────────────────────────────┘
                             │
                             ▼                           702
┌─────────────────────────────────────────────────────────────┐
│  residual learning is performed on inputted feature maps of   │
│  N channels by using multiple successively connected          │
│  residual blocks to obtain feature maps of N channels         │
└─────────────────────────────────────────────────────────────┘
                             │
                             ▼                           703
┌─────────────────────────────────────────────────────────────┐
│  up sampling is performed on inputted feature maps of N       │
│  channels by using another convolutional layer (referred to   │
│  as a fifth convolutional layer) and a integration layer to   │
│  obtain an image of an original size of the reconstructed     │
│  image                                                        │
└─────────────────────────────────────────────────────────────┘
```

FIG. 8

```
                                                         801
┌─────────────────────────────────────────────────────────────┐
│  de-transform and de-quantization processing are performed    │
│  on a received code stream                                    │
└─────────────────────────────────────────────────────────────┘
                             │
                             ▼                           802
┌─────────────────────────────────────────────────────────────┐
│  first time of filtering processing is performed on           │
│  de-transformed and de-quantized contents by using a CNN      │
│  filter                                                       │
└─────────────────────────────────────────────────────────────┘
                             │
                             ▼                           803
┌─────────────────────────────────────────────────────────────┐
│  second time of filtering processing is performed on output   │
│  of the CNN filter by using an SAO filter                     │
└─────────────────────────────────────────────────────────────┘
                             │
                             ▼                           804
┌─────────────────────────────────────────────────────────────┐
│  third time of filtering processing is performed on output    │
│  of the SAO filter by using an ALF filter, a filtered image   │
│  is taken as the reconstructed image and the reconstructed    │
│  image is output                                              │
└─────────────────────────────────────────────────────────────┘
```

FIG. 9

900

**image processing device**

memory  
902

central processing unit  
901

I/O device  
903

display  
904

Europäisches
Patentamt

European
Patent Office

Office européen
des brevets

## EUROPEAN SEARCH REPORT

Application Number

EP 20 17 8490

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LUHANG XU (FUJITSU) ET AL: "Non-CE10: A CNN based in-loop filter for intra frame", 15. JVET MEETING; 20190703 - 20190712; GOTHENBURG; (THE JOINT VIDEO EXPLORATION TEAM OF ISO/IEC JTC1/SC29/WG11 AND ITU-T SG.16 ), , no. JVET-O0157 5 July 2019 (2019-07-05), XP030218728, Retrieved from the Internet: URL:http://phenix.int-evry.fr/jvet/doc_end _user/documents/15_Gothenburg/wg11/JVET-O0 157-v2.zip JVET-O0157.docx [retrieved on 2019-07-05] | 1-3,6-10 | INV. H04N19/82 H04N19/117 H04N19/136 H04N19/59 H04N19/86 |
| Y | * abstract; figures 2-1, 2-2, 2-3 * * paragraph [0002] * | 5 | |
| X | LUHANG XU (FUJITSU) ET AL: "Non-CE10: A CNN based in-loop filter for intra frame", 15. JVET MEETING; 20190703 - 20190712; GOTHENBURG; (THE JOINT VIDEO EXPLORATION TEAM OF ISO/IEC JTC1/SC29/WG11 AND ITU-T SG.16 ), , no. JVET-O0157 5 July 2019 (2019-07-05), XP030218729, Retrieved from the Internet: URL:http://phenix.int-evry.fr/jvet/doc_end _user/documents/15_Gothenburg/wg11/JVET-O0 157-v2.zip JVET-O0157.pptx [retrieved on 2019-07-05] | 1-4,8 | TECHNICAL FIELDS SEARCHED (IPC)  H04N |
| Y | * page 2 - page 4 * | 5 | |

-/--

The present search report has been drawn up for all claims

| Place of search | Date of completion of the search | Examiner |
|---|---|---|
| Munich | 14 July 2020 | Cakiroglu Garton, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches
Patentamt

European
Patent Office

Office européen
des brevets

**EUROPEAN SEARCH REPORT**

Application Number

EP 20 17 8490

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Y-L HSIAO ET AL: "CE13-1.1: Convolutional neural network loop filter", 14. JVET MEETING; 20190319 - 20190327; GENEVA; (THE JOINT VIDEO EXPLORATION TEAM OF ISO/IEC JTC1/SC29/WG11 AND ITU-T SG.16 ), , no. JVET-N0110 13 March 2019 (2019-03-13), XP030254669, Retrieved from the Internet: URL:http://phenix.int-evry.fr/jvet/doc_end _user/documents/14_Geneva/wg11/JVET-N0110- v1.zip JVET-N0110-v1.docx [retrieved on 2019-03-13] * abstract; figures 1, 2 * * paragraph [0002] * | 1,8 | |
| X | LI Y ET AL: "CE13: Summary Report on Neural Network based Filter for Video Coding", 14. JVET MEETING; 20190319 - 20190327; GENEVA; (THE JOINT VIDEO EXPLORATION TEAM OF ISO/IEC JTC1/SC29/WG11 AND ITU-T SG.16 ), , no. JVET-N0033 19 March 2019 (2019-03-19), XP030255433, Retrieved from the Internet: URL:http://phenix.int-evry.fr/jvet/doc_end _user/documents/14_Geneva/wg11/JVET-N0033- v1.zip JVET-N0033-v1.docx [retrieved on 2019-03-19] * paragraph [0002] * | 1,8 | TECHNICAL FIELDS SEARCHED (IPC) |

-/--

The present search report has been drawn up for all claims

| Place of search | Date of completion of the search | Examiner |
|---|---|---|
| Munich | 14 July 2020 | Cakiroglu Garton, S |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 2 of 3

Europäisches
Patentamt

European
Patent Office

Office européen
des brevets

**EUROPEAN SEARCH REPORT**

Application Number

EP 20 17 8490

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2019/075301 A1 (CHOU JIM C [US] ET AL) 7 March 2019 (2019-03-07) * paragraphs [0011] - [0016], [0047], [0076], [0077], [0089] - [0091], [0096], [0112] - [0117] * | 1-10 | |
| A | "Test Model 5 of Versatile Video Coding (VTM 5)", 126. MPEG MEETING; 20190325 - 20190329; GENEVA; (MOTION PICTURE EXPERT GROUP OR ISO/IEC JTC1/SC29/WG11), , no. n18371 7 July 2019 (2019-07-07), XP030222341, Retrieved from the Internet: URL:http://phenix.int-evry.fr/mpeg/doc_end _user/documents/126_Geneva/wg11/w18371.zip w18371.docx [retrieved on 2019-07-07] * paragraphs [03.1], [03.7]; figure 1 * | 1-10 | |
| A | "Working Draft 5 of Versatile Video Coding", 126. MPEG MEETING; 20190325 - 20190329; GENEVA; (MOTION PICTURE EXPERT GROUP OR ISO/IEC JTC1/SC29/WG11), , no. n18370 7 July 2019 (2019-07-07), XP030222340, Retrieved from the Internet: URL:http://phenix.int-evry.fr/mpeg/doc_end _user/documents/126_Geneva/wg11/w18370.zip w18370.docx [retrieved on 2019-07-07] * the whole document * | 1-10 | |

TECHNICAL FIELDS
SEARCHED      (IPC)

The present search report has been drawn up for all claims

| Place of search | Date of completion of the search | Examiner |
|---|---|---|
| Munich | 14 July 2020 | Cakiroglu Garton, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 20 17 8490

This annex lists the patent family members relating to the patent documents cited in the above-mentioned European search report.
The members are as contained in the European Patent Office EDP file on
The European Patent Office is in no way liable for these particulars which are merely given for the purpose of information.

14-07-2020

| Patent document cited in search report | Publication date | Patent family member(s) | Publication date |
|---|---|---|---|
| US 2019075301 A1 | 07-03-2019 | CN 111066326 A<br>US 2019075301 A1<br>WO 2019045883 A1 | 24-04-2020<br>07-03-2019<br>07-03-2019 |

EPO FORM P0459

For more details about this annex : see Official Journal of the European Patent Office, No. 12/82